# FASCICULE DE BREVET EUROPEEN

(11) **EP 2 765 514 B1**
(45) Date de publication et mention de la délivrance du brevet: **19.08.2015**
(21) Numéro de dépôt: 14153590.6
(22) Date de dépôt: 03.02.2014
(51) Int. Cl.: G06F 11/07, G06F 11/16

(54) **Dispositif de sécurisation d'une application client pour un système d'affichage de symbologie du type client-serveur**
Vorrichtung für eine gesicherte Clientapplikation eines symbolischen Displaysystems des Client-Servertyps
Apparatus for a secured client application of a symbolic display system of the client-server type

(30) Priorité: 08.02.2013 FR 1300287
(43) Date de publication de la demande: 13.08.2014
(73) Titulaire: Thales, 92200 Neuilly Sur Seine (FR)
(72) Inventeur: Capircio, Patrice, 33187 Le Haillan (FR); Turpeau, Pierre-Jean, 33187 Le Haillan (FR); Joly, Patrick, 33187 Le Haillan (FR)
(74) Mandataire: Domenego, Bertrand

(56) Documents cités:
- WO-A2-03/093999
- DE-A1- 3 324 313
- FR-A1- 2 963 690
- HAMMETT R ET AL: "Application of syndrome pattern-matching approach to fault isolation in avionic systems", 19911014; 19911014 - 19911017, 14 octobre 1991 (1991-10-14), pages 56-61, XP010093671,

## Description

L'invention est relative à une application client sécurisée pour un système d'affichage de symbologie du type client-serveur, l'application client étant propre à générer, à partir des valeurs instantanées de grandeurs mesurées, une commande de modification d'un objet graphique interprété par une application serveur dudit système d'affichage, ledit objet graphique correspondant à un symbole à afficher sous la forme d'une image sur un dispositif graphique dudit système d'affichage.

Un tel système d'affichage client-serveur est par exemple présent dans le cockpit d'un aéronef

Une symbologie est une méthode de représentation graphique d'informations en utilisant des symboles. Un symbole graphique est composé d'une pluralité de constituants élémentaires, tels que par exemple un segment de droite formant aiguille, un arc de cercle portant une graduation, etc.

Parmi les différentes informations présentées au pilote, certaines sont dites « critiques » au sens où elles sont primordiales, voire vitales, pour le pilotage de l'aéronef.

Afin de garantir l'intégrité d'une information critique affichée par le dispositif graphique, il est nécessaire de mettre en oeuvre un schéma de sécurisation du fonctionnement du système d'affichage client-serveur.

L'intégrité est à comprendre ici comme la capacité d'un système à détecter si des erreurs se sont produites dans des calculs effectués ou des données manipulées par le système.

Dans un système d'affichage client-serveur, il est connu de mettre en oeuvre l'enseignement du document FR 2 963 690 pour garantir l'intégrité de fonctionnement de l'application serveur exécutée sur le serveur et celui du document FR 2 884 949 pour garantir l'intégrité de fonctionnement du dispositif graphique.

L'invention a donc pour but de compléter le schéma de sécurisation du fonctionnement d'un système d'affichage du type client-serveur en proposant un procédé et un dispositif pour garantir l'intégrité de la chaîne de traitement de l'information de l'application client.

A cette fin, l'invention a pour objet un dispositif de sécurisation d'une application client pour un système d'affichage de symbologie du type client-serveur, ladite application client étant propre à générer, à partir des valeurs instantanées de grandeurs mesurées, une commande de modification d'un objet graphique destinée à être interprétée par une application serveur dudit système d'affichage, ledit objet graphique correspondant à un symbole à afficher sous la forme d'une image sur un dispositif graphique dudit système d'affichage, caractérisé en ce que, ladite application client comportant :
- un module d'acquisition et de traitement prenant en entrée les valeurs instantanées de grandeurs mesurées, pour générer des valeurs instantanées de grandeurs d'intérêt ;
- une table de correspondance associant à chaque variable dynamique d'un ensemble de variables dynamiques de chacun des objets maintenus par l'application serveur, une grandeur d'intérêt, ladite table de correspondance permettant d'affecter, en tant que valeur instantanée d'une variable dynamique, la valeur instantanée de la grandeur d'intérêt correspondante ; et,
- un module de génération de commandes propre à émettre une commande à destination de l'application serveur,
   le dispositif comporte :
   - un moyen dédié de sécurisation du fonctionnement dudit module d'acquisition et de traitement ;
   - un moyen dédié de sécurisation de ladite table de correspondance ; et,
   - un moyen dédié de sécurisation dudit module de génération de commandes.

Suivant des modes particuliers de réalisation, le dispositif comporte une ou plusieurs des caractéristiques suivantes, prise(s) isolément ou suivant toutes les combinaisons techniquement possibles :
- ledit module d'acquisition et de traitement permettant d'obtenir un premier jeu de valeurs instantanées pour des grandeurs d'intérêt, le moyen de sécurisation du fonctionnement du module d'acquisition et de traitement comporte : un module de redondance propre à générer un second jeu de valeurs instantanées pour lesdites grandeurs d'intérêt à partir des valeurs instantanées des grandeurs mesurées ; et, un module de comparaison des premier et second jeux de valeurs instantanées des grandeurs d'intérêt.
- le moyen de sécurisation du fonctionnement du module de génération de commandes comporte : un module de rétroaction propre à générer au moins une valeur instantanée d'une variable de rétroaction, à partir d'une commande émise en sortie du module de génération de commandes ; et, un module de vérification propre à comparer ladite valeur instantanée de la variable de rétroaction avec une valeur instantanée d'une variable dynamique correspondante, qui est appliquée en entrée du module de génération de commandes, ou avec une valeur instantanée d'une grandeur d'intérêt correspondante, qui est obtenue en sortie du module d'acquisition et de traitement.
- le module de rétroaction comporte, pour chaque objet graphique, un algorithme de contrôle associé audit objet graphique.
- le moyen de sécurisation de ladite table de correspondance comporte un module de signature numérique propre à calculer une signature numérique initiale de ladite table de correspondance et à vérifier l'intégrité de ladite table de correspondance sur la base de ladite signature numérique initiale.

L'invention a également pour objet un système d'affichage de symbologie du type client-serveur, comportant :
- une application client propre à générer, à partir des valeurs instantanées de grandeurs mesurées, une commande de modification d'un objet graphique ;
- une application serveur propre à interpréter une commande reçue de l'application client, en une instruction graphique ; et,
- un dispositif d'affichage propre à afficher ledit symbole sous la forme d'une image en fonction de l'instruction reçue de l'application serveur,
   caractérisé en ce que ladite application client comporte :
   - un module d'acquisition et de traitement prenant en entrée les valeurs instantanées de grandeurs mesurées, pour générer des valeurs instantanées de grandeurs d'intérêt ;
   - une table de correspondance associant à chaque variable dynamique d'un ensemble de variables dynamiques de chacun des objets maintenus par l'application serveur, une grandeur d'intérêt, ladite table de correspondance permettant d'affecter, en tant que valeur instantanée d'une variable dynamique, la valeur instantanée de la grandeur d'intérêt correspondante ; et,
   - un module de génération de commandes propre à émettre une commande à destination de l'application serveur,
et en ce que le système comporte un dispositif de sécurisation conforme au dispositif ci-dessus.

Suivant des modes particuliers de réalisation, l'application client sécurisée comporte une ou plusieurs des caractéristiques suivantes, prise(s) isolément ou suivant toutes les combinaisons techniquement possibles :
- le système comporte un dispositif de sécurisation de ladite application serveur et/ou un dispositif de sécurisation dudit dispositif d'affichage.
- l'application client et le dispositif de sécurisation de ladite application client sont exécutés sur un calculateur client et l'application serveur est exécutée sur un calculateur serveur, ledit calculateur client étant relié audit calculateur serveur par un réseau de communication.

L'invention a également pour objet un procédé de génération en sécurité de commandes, mis en oeuvre dans un système d'affichage de symbologie du type client-serveur, caractérisé en ce qu'il comporte les étapes consistant à :
- selon une chaîne principale :
   - acquérir et traiter des valeurs instantanées de grandeurs mesurées pour générer des valeurs instantanées de grandeurs d'intérêt ;
   - mettre en correspondance chaque variable dynamique d'un ensemble de variables dynamiques d'un objet graphique maintenu par une application serveur dudit système d'affichage de symbologie, avec une grandeur d'intérêt et affecter, en tant que valeur instantanée de la variable dynamique, ladite valeur instantanée de la grandeur d'intérêt correspondante ; et,
   - générer une commande pour la mise à jour d'une symbologie associée audit objet graphique, lors de la modification de la valeur instantanée d'une variable dynamique dudit objet ; et,
- selon une chaîne de sécurisation:
   - sécuriser l'étape consistant à acquérir et traiter ;
   - sécuriser l'étape consistant à mettre en correspondance ; et,
   - sécuriser l'étape consistant à générer une commande graphique.

L'invention a également pour objet un support d'enregistrement d'informations comportant des instructions pour l'exécution d'un procédé présenté ci-dessus.

En décomposant l'application client pilotant la symbologie en un premier module dédié au traitement des données et en un second module dédié à la représentation de ces données, les premier et second modules étant associés au travers d'une table d'association, la sécurisation de l'application consiste à sécuriser, de manière indépendante, le fonctionnement du premier module, le fonctionnement du second module, l'intégrité de la table d'association et l'intégrité des mécanismes d'accès à celle-ci.

Avantageusement, la présente invention constitue une solution générique, au sens où elle ne dépend pas des spécifications particulières de l'application client (à partir du moment où celle-ci utilise une librairie prédéfinie d'objets sécurisés), ni de l'application serveur, ni de la nature de la symbologie utilisée par le système d'affichage. L'invention et ses avantages seront mieux compris à la lecture de la description qui va suivre, donnée uniquement à titre d'exemple, et faite en se référant aux dessins annexés sur lesquels :
- la figure 1 est une représentation schématique d'un système d'affichage de symbologie du type client-serveur ;
- la figure 2 est une représentation schématique sous forme de blocs d'une application client sécurisée appartenant au système de la figure 1 ;
- la figure 3 est un exemple de table d'association utilisée dans l'application client de la figure 2 ;
- la figure 4 est une représentation du procédé de mise en oeuvre de l'application client de la figure 2.

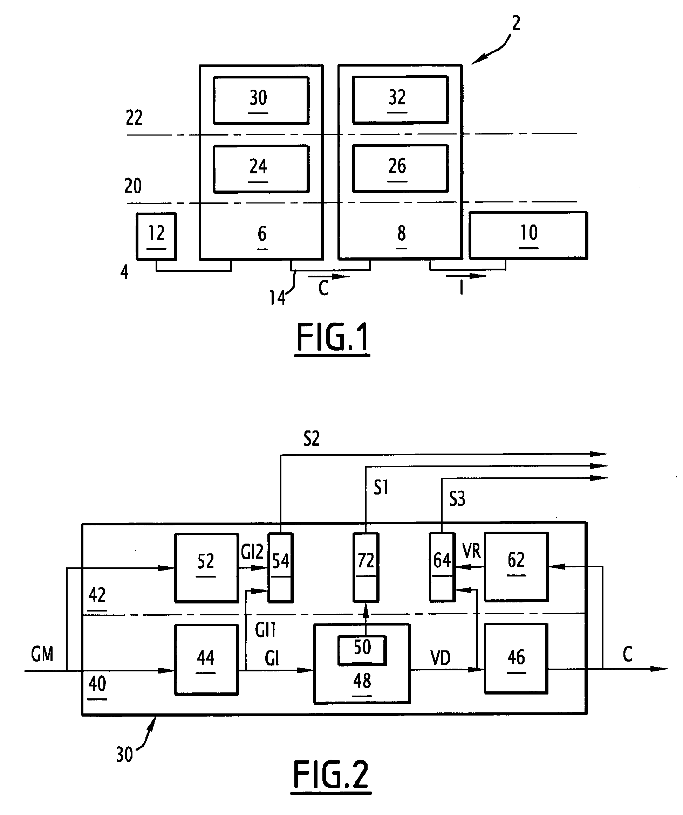

Le système d'affichage 2 présente une architecture du type client-serveur. Comme représenté sur la figure 1, le système 2 comporte une couche matérielle 4.

La couche matérielle 4 comporte un calculateur client 6, un calculateur serveur 8 et un dispositif d'affichage 10.

De manière générique, un calculateur comporte une unité de calcul, une mémoire et une interface d'entrée/sortie.

Le calculateur client 6 est connecté à une pluralité de capteurs embarqués à bord de l'aéronef mais ne faisant pas partie du système 2. Ces capteurs portent la référence générale 12 sur la figure 1.

Les calculateurs client et serveur 6 et 8 sont en communication à travers réseau 14 adapté, par exemple du type ETHERNET.

Le dispositif d'affichage 10 est connecté directement au serveur 8.

Comme représenté sur la figure 1, le système comporte une couche logicielle.

La couche logicielle est subdivisée entre une couche d'exploitation 20 et une couche applicative 22.

La couche d'exploitation 20 comporte un système d'exploitation client 24, qui est exécuté sur le calculateur client 6, et un système d'exploitation serveur 26, qui est exécuté sur le calculateur serveur 8. Comme connu en soi, un système d'exploitation constitue une interface entre une application de la couche applicative et les différentes ressources de la couche matérielle 4.

La couche applicative 22 comporte un logiciel client 30, qui est exécuté sur le calculateur client 6, et une application serveur 32, qui est exécutée sur le calculateur serveur 8.

Une application est un programme d'ordinateur dont les instructions sont stockées dans la mémoire de l'ordinateur et propres à être exécutées par l'unité de calcul de cet ordinateur.

Le système 2 a pour fonction d'afficher des symboles sur le dispositif d'affichage 10 et de mettre à jour, ces symboles en fonction de l'évolution des valeurs instantanées des mesures délivrées par les capteurs 12, que ces symboles sont sensés représenter.

D'une manière connue en soi, l'application serveur 32 se présente de la manière suivante.

Lors d'une phase de configuration, l'application serveur est initialisée de manière à instancier une pluralité d'objets graphiques. Chacun de ces objets graphiques est associé à un symbole pouvant être affiché sur le dispositif d'affichage 10 au cours de l'utilisation du système 2.

La configuration de l'application serveur 32 s'effectue à partir d'un fichier de définition indiquant l'ensemble des objets graphiques qui doivent être configurés et mis à jour par le serveur au cours de l'utilisation du système.

Un objet graphique constitue une mise en oeuvre logicielle d'un symbole graphique objet. Les objets mis à la disposition du concepteur du système appartiennent à une librairie graphique.

Un objet graphique comporte des variables statiques VS dont les valeurs sont fixées lors de la configuration de l'objet et qui ne peuvent être modifiées ensuite.

Un objet graphique comporte des variables dynamiques VD dont les valeurs sont modifiées au cours de l'utilisation du système 2.

Un objet graphique comporte des primitives graphiques qui correspondent respectivement à des constituants élémentaires à partir desquels le symbole associé à l'objet est construit. La notion d'objet graphique est caractéristique de l'application client et n'est pas connue du serveur. En effet celui-ci, ne connaît que les primitives graphiques qu'il met à disposition des applications clients.

Un objet graphique comporte différents opérateurs, et, en particulier, des opérateurs permettant la modification des variables dynamiques de l'objet graphique, et, par conséquent, la modification des primitives graphiques correspondantes pour la mise à jour du symbole affiché par le dispositif d'affichage 10.

Lors de son exécution, l'application serveur 32 est propre à recevoir une commande C émise par le logiciel client 30.

Les commandes C appartiennent à un standard de communication qui a été définit entre le client et le serveur comme, par exemple dans le domaine avionique, le protocole ARINC 661.

Une commande C a pour but la modification des attributs d'une primitive graphique correspond à l'objet graphique qui est mis à jour.

Une commande C comporte, en tant qu'attributs, la primitive graphique concernée ainsi que les nouvelles valeurs à prendre en compte pour les attributs de cette primitive graphique suite à la mise à jour des variables dynamiques de l'objet graphique.

L'application serveur 32 est alors propre à transcrire la commande C reçue en une pile d'instructions d'un langage graphique, ces instructions étant ensuite transmises au dispositif d'affichage, afin que celui-ci affiche, sous la forme d'une image, un symbole mis à jour.

Comme cela est représenté sur la figure 2, le logiciel client 30 comporte une partie principale 40, correspondant à l'application client proprement dite de génération des commandes graphiques, et une partie de sécurisation 42, correspondant au dispositif de sécurisation de l'application client.

La partie principale 40 a pour fonction de mettre en oeuvre une chaîne de génération de commandes C à partir de l'acquisition de grandeurs mesurées GM par les capteurs, tandis que la partie de sécurisation 42 a pour fonction de mettre en oeuvre une chaîne de sécurisation de la chaîne de génération de commandes.

La partie principale 40 du logiciel client 30 comporte un module d'acquisition et de traitement 44, un module de génération de commandes 46, et un module de correspondance 48 comportant une table de correspondance 50 associant entre elles des grandeurs d'intérêt GI en sortie du module d'acquisition et de traitement 44 et des variables dynamique VD en entrée du module de génération de commandes 46.

Le module d'acquisition et de traitement 44 est propre à acquérir les valeurs instantanées de grandeurs mesurées GM et à traiter ces valeurs (par filtrage, calcul de fonctions élémentaires ou complexes, etc.) pour délivrer en sortie des valeurs instantanées de grandeurs d'intérêt GI.

Les grandeurs mesurées GM sont par exemple des grandeurs physiques mesurées directement par les capteurs 12, connectés à l'interface d'entrée/sortie du calculateur client 6. En variante, les grandeurs mesurées sont délivrées par un ou plusieurs autres dispositifs de calcul embarqués à bord de l'aéronef et extérieurs au système d'affichage.

Un symbole est un objet qui synthétise en une seule représentation une ou plusieurs grandeurs d'intérêt GI. De manière similaire, une même grandeur d'intérêt GI peut éventuellement être utilisée dans l'élaboration de plusieurs symboles différents.

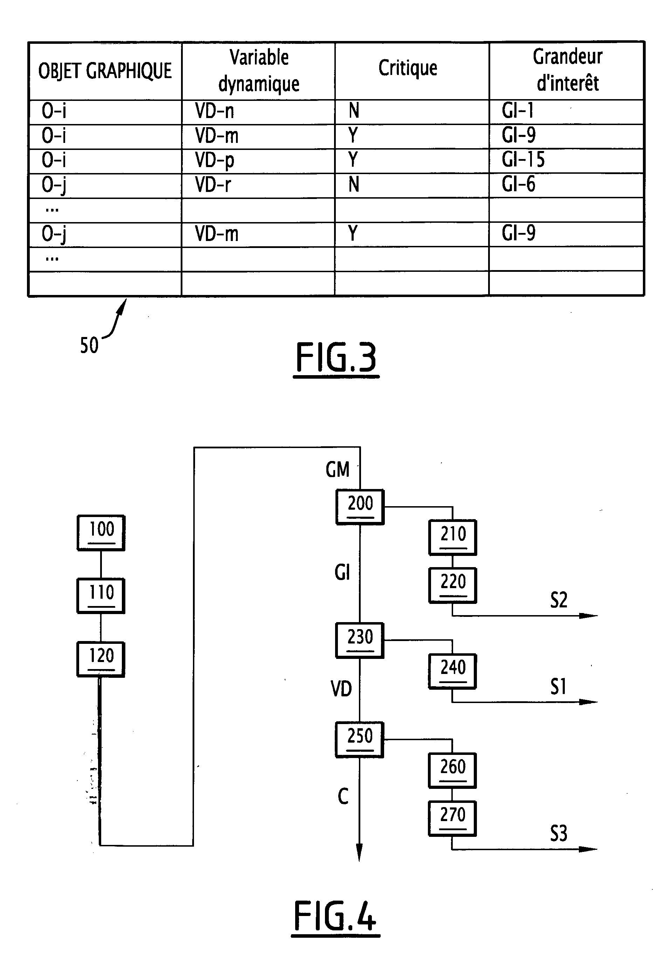

Comme cela est illustré par la figure 3, la table 50 permet ainsi d'associer à chaque variable dynamique VD de chaque objet graphique Obj, une grandeur d'intérêt GI. De plus, la table 50 comporte un champ indiquant si la variable dynamique VD de l'objet Obj est critique ou non critique.

La table 50 est construite dans une phase de configuration pour tenir compte des objets graphiques que l'application serveur 32 devra interpréter au cours de l'utilisation du système 2. En particulier, chaque objet de la librairie graphique comporte pour chaque variable dynamique un drapeau indiquant si cette variable est critique ou non critique. La valeur de ce drapeau est reprise dans la table 50 lors de sa configuration.

Le module 48 est propre, sur la base de la table 50, à affecter la valeur instantanée d'une grandeur d'intérêt GI, aux différentes variables dynamiques VD associées à ladite grandeur d'intérêt GI.

Le module de génération de commandes 46 est propre à être appelé périodiquement ou lorsque la valeur instantanée d'une variable dynamique VD est modifiée.

Le module 46 est conçu pour générer une ou plusieurs commandes C pour la modification des primitives graphiques qui correspondent l'objet dont au moins une des grandeurs dynamiques VD a évoluée.

Le module 46 est ainsi propre à générer une commande C issue des modifications des variables dynamiques VD de l'objet graphique concerné. Le module 46 est propre à transmettre la commande ainsi générée au calculateur serveur 8 via le réseau de communication 14.

Parmi l'ensemble des informations affichées sous forme de symboles, certaines sont critiques au sens donné à cet adjectif ci-dessus.

La problématique de la sécurisation de la chaîne de traitement des variables dynamiques VD critiques, lors de l'exécution de l'application client, consiste à être capable de détecter la survenue d'erreur dans la génération d'une commande C relative à une variable dynamique VD critique.

La partie de sécurisation 42 de l'application client permet la génération en sécurité de commandes C par la partie principale 40 du logiciel client 30.

En référence avec la figure 2, la partie de sécurisation 42 comporte un module de redondance 52 et un module de comparaison 54, un module de rétroaction 62 et un module de vérification 64, et un module de signature numérique 72.

Comme indiqué ci-dessus, dans la phase de configuration, la table de correspondance 50 est construite en renseignant, pour chaque type d'objet graphique instancié par l'application serveur 32, et pour chaque variable dynamique VD de cet objet, un champ indiquant si oui ou non la variable dynamique VD concernée est critique, ainsi que la grandeur d'intérêt GI produite en sortie du module d'acquisition et de traitement 44 qui doit être associée à cette variable dynamique VD.

Une fois la table 50 configurée, le module de signature numérique 72 est propre à générer, par mise en oeuvre d'un algorithme de signature numérique, une signature initiale de la table 50.

Un tel algorithme de signature numérique est connu en tant que tel par l'homme du métier.

Le module 72 est également propre, à un instant quelconque de l'exécution de l'application client, de calculer la signature instantanée de la table 50 et de la comparer à la signature initiale de celle-ci.

En cas de différence entre ces deux signatures, le module 72 est propre à émettre un premier signal d'alarme S1 indiquant une corruption de la table 50. Le module de signature permet ainsi de garantir l'intégrité de la table 50 durant le fonctionnement du système 2.

Le module de redondance 52 consiste en une duplication du code du module d'acquisition et de traitement 44, au moins pour ce qui concerne l'acquisition et le traitement conduisant à la détermination des grandeurs d'intérêt GI étiquetée comme critique dans la table de correspondance 50.

Le module 52 est propre à être exécuté en parallèle de l'exécution du module d'acquisition et de traitement 44 pour obtenir, à partir d'un même ensemble de valeurs instantanées de grandeurs mesurées GM, un premier jeu de valeurs instantanées GI1 et un second jeu de valeurs instantanées GI2 des grandeurs d'intérêt GI critiques.

Le module de comparaison 54 prend en entrée les premier et second jeux de valeurs instantanées GI1 et GI2 des grandeurs d'intérêt critiques et vérifie si oui ou non un critère de comparaison est respecté entre ces valeurs instantanées.

Si le critère de comparaison n'est pas respecté, le module 54 est conçu pour générer un signal d'alarme S2.

Ainsi, la mise en oeuvre du module de redondance 52 et du module de comparaison 54 permet une sécurisation du module d'acquisition et de traitement 44 pour la détermination des grandeurs d'intérêt GI critiques.

Le module de rétroaction 62 est propre à vérifier la cohérence d'une commande C avec les valeurs instantanées de la ou des variables dynamiques VD critiques dont la modification a causé la génération de la commande C par le module 46.

Le module 62 prend en entrée une commande C envoyée vers le serveur.

Dans la librairie d'objets graphiques, chaque objet est associée à un algorithme de contrôle.

Le module de rétroaction 62 est alors propre à identifier l'objet mentionné dans la commande C et à appeler l'algorithme de contrôle associé à cet objet graphique. Par un mécanisme de calcul inverse, l'algorithme de contrôle est propre à déterminer les valeurs instantanées d'une pluralité de variables de rétroaction VR, à partir des attributs de la commande C.

Le module de vérification 64 est conçu pour vérifier qu'à chaque instant, les valeurs instantanées des variables de rétroaction VR correspondent à celles des variables dynamiques VD critiques appliquées en entrée du module de génération de commandes 46.

Le module de vérification 64 est propre à déterminer si les valeurs instantanées des variables dynamiques VD critiques et des variables de rétroaction VR respectent un critère de vérification.

En cas de non respect de ce critère, le module 64 est propre à générer un troisième signal d'alarme S3.

Ainsi, la mise en oeuvre des modules de rétroaction 62 et de vérification 64 permet une sécurisation du module de génération de commandes 46, au moins pour la génération de commandes relatives à des variables dynamique étiquetées comme critiques dans la table de correspondance 50.

Le procédé de génération en sécurité de commandes graphiques mis en oeuvre lors de l'exécution du logiciel client 30 est le suivant.

Dans une phase préalable de configuration, le fichier de définition est lu pour instancier une pluralité d'objets graphiques.

A l'étape 100, la table 50 est construite en renseignant, pour chaque objet Obj instancié, et pour chaque variable dynamique VD de cet objet, un champ indiquant si oui ou non la variable dynamique concernée est critique, ainsi que la grandeur d'intérêt GI produite en sortie du module d'acquisition et de traitement 44 qui devra être associée à cette variable dynamique.

A l'étape 110, le module de signature numérique 72 est exécuté une fois que la table 50 a été configurée, afin de déterminer une signature numérique initiale de la table 50.

Le module d'acquisition et de traitement ayant été développé en amont, à l'étape 120, le module de redondance 52 est généré en dupliquant le code du module d'acquisition et de traitement 44, au moins pour ce qui concerne l'acquisition et le traitement conduisant à la détermination de grandeurs d'intérêt GI étiquetée comme critique dans la table 50.

Dans une phase d'exécution du logiciel client 30 sécurisé, le module d'acquisition et de traitement 44 est périodiquement exécuté (étape 200) pour acquérir des valeurs instantanées de grandeurs mesurées GM par les capteurs 12 et pour traiter ces valeurs instantanées pour déterminer les valeurs instantanées de grandeurs d'intérêt GI.

Chaque exécution du module d'acquisition et de traitement 44 est suivie de l'exécution du module de redondance 52 (étape 210). Tandis que l'exécution du module 44 permet de déterminer un premier jeu de valeurs instantanées GI1 des grandeurs d'intérêt GI critiques, l'exécution du module 52 permet la détermination d'un second jeu de valeurs instantanées GI2 des grandeurs d'intérêt GI critiques.

Puis, à l'étape 220, après l'exécution du module 62, le module de comparaison 64 est exécuté pour vérifier que, pour chaque grandeur d'intérêt GI critique, la valeur instantanée du premier jeu et la valeur instantanée du second jeu respectent le critère de comparaison mis en oeuvre par le module 64. Si le critère de comparaison n'est pas respecté, le module 64 génère un signal d'alarme S2.

A l'étape 230, le module de correspondance 48 est exécuté. La lecture de la table de correspondance 50 permet d'affecter chaque valeur instantanée d'une grandeur d'intérêt GI obtenue en sortie de l'étape 200, en tant que valeur instantanée de la variable dynamique VD associée à cette grandeur d'intérêt.

Après que le module 48 a accédé à la table 50, le module de signature numérique 72 est exécuté pour calculer la signature numérique courante de la table 50 et la comparer à la signature initiale (étape 240).

Si aucune grandeur d'intérêt GI n'a été modifiée, le module 72 vérifie que la signature numérique courante de la table 50 est toujours identique.

Si des grandeurs d'intérêt GI ont été modifiées alors le module 72 vérifie que les parties non modifiées de la table 50 sont identiques aux précédentes et que les mises à jour des valeurs des variables dynamiques VD correspondent bien aux modifications des grandeurs d'intérêt GI.

En cas d'incohérence, le module 72 génère un signal d'alarme S1.

Lorsque qu'une variable dynamique VD est modifiée, le module de génération de commande 46 est exécuté (étape 250) pour la génération des commandes C nécessaires à la modification des primitives graphiques de l'objet correspondant. Pour ce faire, le module de génération 46 génère une commande C permettant, en fonction des modification des variables VD de l'objet graphique concerné, de demander à l'ordinateur serveur 8 la modifications des attributs des primitives graphiques. Une fois la commande C générée, le module 46 l'émet sur le réseau 14 à destination du serveur 8.

Lorsque la variable dynamique VD dont la valeur instantanée a été modifiée est une variable dynamique VD critique, alors, le module de rétroaction 62 est exécuté (étape 260), à la suite de l'exécution du module de génération de commandes 46

Le module 62 prend en entrée la commande C émise par le module de génération de commandes 46 et applique l'algorithme de contrôle associé à l'objet attribut de la commande C, de manière à calculer les valeurs instantanées des variables de rétroaction VR.

Puis, à l'étape 270, le module de vérification 64 est exécuté pour vérifier que les valeurs instantanées des variables de rétroaction VR correspondent à celles des variables dynamiques VD critiques prises en entrée du module de génération de commandes 46. Le module de vérification 64 est propre à déterminer si les valeurs instantanées des variables dynamiques critiques et des variables de rétroaction respectent un critère de vérification. En cas de non respect de ce critère, le module 64 émet un signal d'alarme S3.

L'homme du métier saura comment utiliser les différents signaux d'alarme générés par les modules 54, 64 et 72 du dispositif de sécurisation du logiciel client 30.

La mise en oeuvre de l'application client sécurisée avec un serveur et un dispositif de génération d'affichage eux-mêmes sécurisés permet d'assurer l'intégrité de la chaîne d'affichage de symbologie critique sur le système d'affichage client-serveur.

Dans la présente description, les calculateurs client et serveur ont été présentés comme distincts l'un de l'autre. Cependant, il est envisageable d'exécuter les applications client et serveur sur un même calculateur, par exemple dans des partitions logiques différentes se partageant les mêmes ressources matérielles. L'échange de commande depuis la partition client vers la partition serveur s'effectuant par exemple par un bus virtuel d'échange de message entre partitions, mécanisme connu de l'homme du métier.

De manière similaire, les parties principales et de sécurisation de l'application client ont été présentées comme appartenant à la même application exécutée sur le calculateur client. En fait, ces parties sont exécutées séparément soit sur des partitions différentes, soit encore sur des calculateurs différents. Des mécanismes de synchronisation entre les deux parties doivent alors être mis en oeuvre.

Dans le mode de réalisation présenté ci-dessus, des erreurs peuvent survenir lors de la recopie de la valeur instantanée d'une grandeur d'intérêt dans l'espace mémoire associé à une variable dynamique. Ce risque complique donc le calcul de signature numérique de la table 50 dont une partie n'est pas constante puisqu'elle varie au fur et à mesure des mises à jour des grandeurs d'intérêt GI en fonction de l'évolution des grandeurs mesurées GM. En variante, pour simplifier le module de calcul de la signature numérique de la table de correspondance 50, il est possible que le module de vérification permette de comparer la valeur instantanée d'une variable de rétroaction obtenue en sortie du module de rétroaction, non plus avec la valeur instantanée de la variable dynamique VD, mais avec la valeur instantanée de la grandeur d'intérêt GI correspondante, telle qu'indiquée par la table de correspondance 50.

## Revendications

1. Dispositif de sécurisation (42) d'une application client (40) pour un système d'affichage de symbologie du type client-serveur (2), ladite application client étant propre à générer, à partir des valeurs instantanées de grandeurs mesurées (GM), une commande (C) de modification d'un objet graphique destinée à être interprétée par une application serveur (32) dudit système d'affichage, ledit objet graphique correspondant à un symbole à afficher sous la forme d'une image sur un dispositif graphique (10) dudit système d'affichage, **caractérisé en ce que**, ladite application client (40) comportant :
- un module d'acquisition et de traitement (44) prenant en entrée les valeurs instantanées de grandeurs mesurées (GM), pour générer des valeurs instantanées de grandeurs d'intérêt (GI) ;
- une table de correspondance (50) associant à chaque variable dynamique (VD) d'un ensemble de variables dynamiques de chacun des objets maintenus par l'application serveur (32), une grandeur d'intérêt (GI), ladite table de correspondance (50) permettant d'affecter, en tant que valeur instantanée d'une variable dynamique (VD), la valeur instantanée de la grandeur d'intérêt (GI) correspondante ; et,
- un module de génération de commandes (46) propre à émettre une commande (C) à destination de l'application serveur,
le dispositif comporte :
- un moyen (52, 54) dédié de sécurisation du fonctionnement dudit module d'acquisition et de traitement (44) ;
- un moyen (72) dédié de sécurisation de ladite table de correspondance (50); et,
- un moyen (62, 64) dédié de sécurisation dudit module de génération de commandes (46).

2. Dispositif selon la revendication 1, dans lequel, ledit module d'acquisition et de traitement (44) permettant d'obtenir un premier jeu de valeurs instantanées (GI1) pour des grandeurs d'intérêt (GI), le moyen de sécurisation du fonctionnement du module d'acquisition et de traitement comporte :
- un module de redondance (52) propre à générer un second jeu de valeurs instantanées (GI2) pour lesdites grandeurs d'intérêt (GI) à partir des valeurs instantanées des grandeurs mesurées (GM) ; et,
- un module de comparaison (54) des premier et second jeux de valeurs instantanées des grandeurs d'intérêt.

3. Dispositif selon la revendication 1 ou la revendication 2, dans lequel le moyen de sécurisation du fonctionnement du module de génération de commandes (46) comporte :
- un module de rétroaction (62) propre à générer au moins une valeur instantanée d'une variable de rétroaction (VR), à partir d'une commande (C) émise en sortie du module de génération de commandes (46) ; et,
- un module de vérification (64) propre à comparer ladite valeur instantanée de la variable de rétroaction (VR) avec une valeur instantanée d'une variable dynamique (VD) correspondante, qui est appliquée en entrée du module de génération de commandes (46), ou avec une valeur instantanée d'une grandeur d'intérêt (GI) correspondante, qui est obtenue en sortie du module d'acquisition et de traitement.

4. Dispositif selon la revendication 3, dans lequel le module de rétroaction (62) comporte, pour chaque objet graphique, un algorithme de contrôle associé audit objet graphique.

5. Dispositif selon l'une quelconque des revendications 1 à 4, dans lequel le moyen de sécurisation de ladite table de correspondance (50) comporte un module de signature numérique (72) propre à calculer une signature numérique initiale de ladite table de correspondance (50) et à vérifier l'intégrité de ladite table de correspondance (50) sur la base de ladite signature numérique initiale.

6. Système d'affichage de symbologie (2) du type client-serveur, comportant :
- une application client (40) propre à générer, à partir des valeurs instantanées de grandeurs mesurées (GM), une commande (C) de modification d'un objet graphique ;
- une application serveur (32) propre à interpréter une commande (C) reçue de l'application client (40), en une instruction graphique (I) ; et,
- un dispositif d'affichage (10) propre à afficher ledit symbole sous la forme d'une image en fonction de l'instruction (I) reçue de l'application serveur (32),
**caractérisé en ce que** ladite application client comporte :
- un module d'acquisition et de traitement (44) prenant en entrée les valeurs instantanées de grandeurs mesurées (GM), pour générer des valeurs instantanées de grandeurs d'intérêt (GI) ;
- une table de correspondance (50) associant à chaque variable dynamique (VD) d'un ensemble de variables dynamiques de chacun des objets maintenus par l'application serveur (32), une grandeur d'intérêt (GI), ladite table de correspondance (50) permettant d'affecter, en tant que valeur instantanée d'une variable dynamique (VD), la valeur instantanée de la grandeur d'intérêt (GI) correspondante ; et,
- un module de génération de commandes (46) propre à émettre une commande (C) à destination de l'application serveur,
et **en ce que** le système comporte un dispositif de sécurisation de ladite application client conforme à l'une quelconque des revendications 1 à 5.

7. Système d'affichage de symbologie (2) selon la revendication 6, comportant un dispositif de sécurisation de ladite application serveur (32) et/ou un dispositif de sécurisation dudit dispositif d'affichage (10).

8. Système d'affichage de symbologie (2) selon la revendication 6 ou la revendication 7, dans lequel l'application client (40) et le dispositif de sécurisation (42) de ladite application client sont exécutés sur un calculateur client (6) et l'application serveur (32) est exécutée sur un calculateur serveur (8), ledit calculateur client étant relié audit calculateur serveur par un réseau de communication (14) adapté.

9. Procédé de génération en sécurité de commandes (C), mis en oeuvre dans un système d'affichage de symbologie (2) du type client-serveur, **caractérisé en ce qu'**il comporte les étapes consistant à :
- selon une chaîne principale :
- acquérir et traiter (200) des valeurs instantanées de grandeurs mesurées (GM) pour générer des valeurs instantanées de grandeurs d'intérêt (GI) ;
- mettre en correspondance (230) chaque variable dynamique (VD) d'un ensemble de variables dynamiques d'un objet graphique maintenu par une application serveur (32) dudit système d'affichage de symbologie (2), avec une grandeur d'intérêt (GI) et affecter, en tant que valeur instantanée de la variable dynamique (VD), ladite valeur instantanée de la grandeur d'intérêt (GI) correspondante ; et,
- générer (250) une commande (C) pour la mise à jour d'une symbologie associée audit objet graphique, lors de la modification de la valeur instantanée d'une variable dynamique dudit objet ; et,
- selon une chaîne de sécurisation:
- sécuriser (210, 220) l'étape consistant à acquérir et traiter ;
- sécuriser (240) l'étape consistant à mettre en correspondance ; et,
- sécuriser (260, 270) l'étape consistant à générer une commande graphique.

10. Support d'enregistrement d'informations, **caractérisé en ce qu'**il comporte des instructions pour l'exécution d'un procédé de génération en sécurité de commandes graphiques conforme à la revendication 9, lorsque les instructions sont exécutées par un calculateur client d'un système d'affichage de symbologie (2) du type client-serveur.

## Patentansprüche

1. Sicherungsvorrichtung (42) einer Clientapplikation (40) für ein Symboldisplaysystems des Client-Server-Typs (2), wobei die Clientapplikation imstande ist, ausgehend von Momentwerten gemessener Größen (GM) einen Änderungsbefehl (C) eines grafischen Objekts zu erzeugen, der zur Auslegung durch eine Serverapplikation (32) des Displaysystems bestimmt ist, wobei das grafische Objekt einem in Form eine Bilds auf einer grafischen Vorrichtung (10) des Displaysystems anzuzeigenden Symbol entspricht, **dadurch gekennzeichnet, dass** die Clientapplikation (40) aufweist:
- ein Erfassungs- und Verarbeitungsmodul (44), das am Eingang die Momentwerte gemessener Größen (GM) entgegennimmt, um Momentwerte interessierender Größen (GI) zu erzeugen,
- eine Korrespondenztabelle (50), die jeder dynamischen Variablen (VD) von einer Gruppe dynamischer Variablen jeder der von der Serverapplikation (32) gehaltenen Objekte eine interessierende Größe (GI) zuordnet, wobei die Korrespondenztabelle (50) erlaubt, den Momentwert der entsprechenden interessierenden Größe (GI) als Momentwert einer dynamischen Variablen (VD) zuzuweisen,
- ein Befehlserzeugungsmodul (46), das imstande ist, einen Befehl (C) an die Serverapplikation zu senden,
wobei die Vorrichtung aufweist:
- ein spezielles Sicherungsmittel (52, 54) der Funktion des Erfassungs- und Verarbeitungsmoduls (44),
- ein spezielles Sicherungsmittel (72) der Korrespondenztabelle (50) und
- ein spezielles Sicherungsmittel (62, 64) des Befehlserzeugungsmoduls (46).

2. Vorrichtung nach Anspruch 1, wobei das Erfassungs- und Verarbeitungsmodul (44) erlaubt, ein erstes Momentwerteset (GI1) für interessierende Größen (GI) zu erhalten, wobei das Sicherungsmittel der Funktion des Erfassungs- und Verarbeitungsmoduls aufweist:
- ein Redundanzmodul (52), das imstande ist, ein zweites Momentwerteset (GI2) für die interessierenden Größen (GI) aus den Momentwerten der gemessenen Größen (GM) zu erzeugen, und
- ein modul (54) die ersten und zweiten Momentwertesets der interessierenden Größen zu vergleichen

3. Vorrichtung nach Anspruch 1 oder Anspruch 2, wobei das Sicherungsmittel der Funktion des Befehlserzeugungsmoduls (46) aufweist:
- ein Retroaktionsmodul (62), das imstande ist, mindestens einen Momentwert einer Retroaktionsvariablen (VR) von einem aus dem Befehlserzeugungsmodul (46) gesendeten Befehl (C) zu erzeugen, und
- ein Überprüfungsmodul (64), das imstande ist, den Momentwert der Retroaktionsvariablen (VR) mit einem Momentwert einer entsprechenden dynamischen Variablen (VD) zu vergleichen, die am Eingang des Befehlserzeugungsmoduls (46) angewendet wird, oder mit einem Momentwert einer entsprechenden interessierenden Größe (GI) aus dem Erfassungs- und Verarbeitungsmodul.

4. Vorrichtung nach Anspruch 3, wobei das Retroaktionsmodul (62) für jedes grafische Objekt einen dem grafischen Objekt zugeordneten Kontrollalgorithmus aufweist.

5. Vorrichtung nach einem der Ansprüche 1 bis 4, wobei das Sicherungsmittel der Korrespondenztabelle (50) ein digitales Signaturmodul (72) aufweist, das imstande ist, eine digitale Anfangssignatur der Korrespondenztabelle (50) zu berechnen und die Integrität der Korrespondenztabelle (50) auf der Basis der digitalen Anfangssignatur zu überprüfen.

6. Symboldisplaysystem (2) des Client-Server-Typs, das aufweist:
- eine Clientapplikation (40), die imstande ist, von Momentwerten gemessener Größen (GM) einen Änderungsbefehl (C) eines grafischen Objekts zu erzeugen,
- eine Serverapplikation (32), die imstande ist, einen von der Clientapplikation (40) empfangenen Befehl (C) als grafische Instruktion (I) auszulegen, und,
- eine Anzeigevorrichtung (10), die imstande ist, das Symbol in Form eines Bilds in Abhängigkeit von der Serverapplikation (32) empfangenen Instruktion (I) anzuzeigen,
**dadurch gekennzeichnet, dass** die Clientapplikation aufweist:
- ein Erfassungs- und Verarbeitungsmodul (44), das am Eingang die Momentwerte gemessener Größen (GM) entgegennimmt, um Momentwerte interessierender Größen (GI) zu erzeugen,
- eine Korrespondenztabelle (50), die jeder dynamischen Variablen (VD) einer Gruppe dynamischer Variablen jeder der von der Serverapplikation (32) gehaltenen Objekte eine interessierende Größe (GI) zuordnet, wobei die Korrespondenztabelle (50) erlaubt, den Momentwert der entsprechenden interessierenden Größe (GI) als Momentwert einer dynamischen Variablen (VD) zuzuweisen,
- ein Befehlserzeugungsmodul (46), das imstande ist, einen Befehl (C) an die Serverapplikation zu senden,
und dass das System eine Sicherungsvorrichtung der Clientapplikation nach einem der Ansprüche 1 bis 5 aufweist.

7. Symboldisplaysystem (2) nach Anspruch 6, das eine Sicherungsvorrichtung der Serverapplikation (32) und/oder eine Sicherungsvorrichtung der Anzeigevorrichtung (10) aufweist.

8. Symboldisplaysystem (2) nach Anspruch 6 oder Anspruch 7, wobei die Clientapplikation (40) und die Sicherungsvorrichtung (42) der Clientapplikation auf einem Clientrechner (6) ausgeführt werden und die Serverapplikation (32) auf eine Serverrechner (8) ausgeführt wird, wobei der Clientrechner mit dem Serverrechner durch ein geeignetes Kommunikationsnetz (14) verbunden ist.

9. Verfahren zum sicheren Erzeugen von Befehlen (C), das in einem Symboldisplaysystem (2) des Client-Server-Typs umgesetzt wird, **dadurch gekennzeichnet, dass** es die folgenden Schritte umfasst:
- gemäß einer Hauptkette:
- Erfassen und Verarbeiten (200) der Momentwerte gemessener Größen (GM), um Momentwerte interessierender Größen (GI) zu erzeugen,
- Versetzen jeder dynamischen Variablen (VD) einer Gruppe dynamischer Variablen eines von einer Serverapplikation (32) des Symboldisplaysystems (2) gehaltenen grafischen Objekts in Übereinstimmung (230) mit einer interessierenden Größe (GI) und Zuweisen des Momentwerts der entsprechenden interessierenden Größe (GI) als Momentwert der dynamischen Variablen (VD), und
- Erzeugen (250) eines Befehls (C) für die Aktualisierung eines dem grafischen Objekt zugeordneten Symbols bei der Änderung des Momentwerts einer dynamischen Variablen des Objekts, und
- gemäß einer Sicherungskette:
- Sichern (210, 220) des Schritts, der aus dem Erfassen und Verarbeiten besteht,
- Sichern (240) des Schritts, der aus dem Inentsprechungbringen besteht, und
- Sichern (260, 270) des Schritts, der im Erzeugen eines grafischen Befehls besteht.

10. Informationsspeichermedium, **dadurch gekennzeichnet, dass** es Instruktionen für die Ausführung eines Verfahrens gesicherter Erzeugung grafischer Befehle nach Anspruch 9 aufweist, wenn die Instruktionen von einem Clientrechner eines Symboldisplaysystems (2) des Client-Server-Typs ausgeführt werden.

## Claims

1. A device (42) for securing a client application (40) for a symbology display system of the client-server (2) type, said client application being able to generate, from instantaneous values of measured quantities (GM), a command (C) for modifying a graphic object intended to be interpreted by a server application (32) of said display system, said graphic object corresponding to a symbol to be displayed as an image on a graphic device (10) of said display system, **characterized in that**, said client application (40) including:
- an acquisition and processing module (44) taking as an input the instantaneous values of measured quantities (GM), in order to generate instantaneous values of quantities of interest (GI);
- a matching table (50) associating with each dynamic variable (VD) from a set of dynamic variables of each of the objects maintained by the server application (32), a quantity of interest (GI), said matching table (50) giving the possibility of assigning, as an instantaneous value of a dynamic variable (VD), the instantaneous value of the corresponding quantity of interest (GI); and,
- a module for generating commands (46) able to emit a command (C) intended for the server application,
the device includes:
- a dedicated means (52, 54) for securing the operation of said acquisition and processing module (44);
- a dedicated means (72) for securing said matching table (50); and,
- a dedicated means (62, 64) for securing said module for generating commands (46).

2. The device according to claim 1, wherein, as said acquisition and processing module (44) giving the possibility of obtaining a first set of instantaneous values (GI1) for quantities of interest (GI), the means for securing the operation of the acquisition and processing module includes:
- a redundancy module (52) able to generate a 2^{nd} set of instantaneous values (GI2) for said quantities of interest (GI) from instantaneous values of measured quantities (GM); and,
- a module (54) for comparing the first and second sets of instantaneous values of quantities of interest.

3. The device according to claim 1 or claim 2, wherein the means for securing the operation of the module for generating commands (46) includes:
- a feedback module (62) able to generate at least one instantaneous value of a feedback variable (VR), from a command (C) emitted at the output of the module for generating commands (46); and,
- a verification module (64) able to compare said instantaneous value of the feedback variable (VR) with an instantaneous value of a corresponding dynamic variable (VD), which is applied at the input of the module for generating commands (46), or with an instantaneous value of a corresponding quantity of interest (GI), which is obtained at the output of the acquisition and processing module.

4. The device according to claim 3, wherein the feedback module (62) includes, for each graphic object, a control algorithm associated with said graphic object.

5. The device according to any of claims 1 to 4, wherein the means for securing said matching table (50) includes a digital signature module (72) able to calculate an initial digital signature of said matching table (50) and to verify the integrity of said matching table (50) on the basis of said initial digital signature.

6. A symbology device system (2) of the client-server type, including:
- a client application (40) able to generate, from instantaneous values of measured quantities (GM), a command (C) for modifying a graphic object;
- a server application (32) able to interpret a command (C) received from the client application (40) as a graphic instruction (I); and,
- a display device (10) able to display said symbol as an image depending on the instruction (I) received from the application server (32),
**characterized in that** said client application includes:
- an acquisition and processing module (44) taking as input, the instantaneous values of measured quantities (GM), for generating instantaneous values of quantities of interest (GI);
- a matching table (50) associating with each dynamic variable (VD) from a set of dynamic variables of each of the objects maintained by the server application (32), a quantity of interest (GI), said matching table (50) giving the possibility of assigning, as an instantaneous value of a dynamic variable (VD), the instantaneous value of the corresponding quantity of interest (GI); and,
- a module for generating commands (46) able to emit a command (C) intended for the server application,
and **in that** the system includes a device for securing said client application according to any of claims 1 to 5.

7. The symbology display system (2) according to claim 6, including a device for securing said server application (32) and/or a device for securing said display device (10).

8. The symbology display system (2) according to claim 6 or claim 7, wherein the client application (40) and the device (42) for securing said client application are executed on a client computer (6) and the server application (32) is executed on a server computer (8), said client computer being connected to said server computer through a suitable communications network (14).

9. A method for safely generating commands (C), applied in a symbology display system (2) of the client-server type, characterizing that it includes the steps:
- along a main chain;
- acquiring and processing (200) instantaneous values of measured quantities (GM) for generating instantaneous values of quantities of interest (GI);
- matching (230) each dynamic variable (VD) from a set of dynamic variables of a graphic object maintained by a server application (32) of said symbology display system (2), with a quantity of interest (GI) and assigning, as an instantaneous value of the dynamic variable (VD), though said instantaneous value of the corresponding quantity of interest (GI); and,
- generating (250) a command (C) for updating a symbology associated with said graphic objects, during the modification of the instantaneous value of a dynamic variable of said object; and,
- along a securing chain:
- securing (210, 220) the step consisting of acquiring and processing;
- securing (240) the step consisting of matching; and,
- securing (260, 270) the step for generating a graphic command.

10. A medium for recording information, **characterized in that** it includes instructions for executing a method for safely generating graphic commands according to claim 9, when the instructions are executed by a client computer of a symbology display system (2) of the client-server type.
